# EUROPEAN PATENT SPECIFICATION

(11) **EP 1 803 337 B1**
(45) Date of publication and mention of the grant of the patent: **07.10.2015**
(21) Application number: 05788646.7
(22) Date of filing: 18.08.2005
(51) Int. Cl.: H05F 1/02, F16G 1/00, D01D 5/098, D04H 3/16

(54) **ANTISTATIC TRANSFER BELT FOR NONWOVENS PROCESS**
ANTISTATISCHES TRANSFERBAND FÜR EINEN VLIESPROZESS
COURROIE DE TRANSFERT ANTISTATIQUE UTILISEE LORS DE LA PRODUCTION DE NON TISSES

(30) Priority: 27.08.2004 US 928894
(43) Date of publication of application: 04.07.2007
(73) Proprietor: ALBANY INTERNATIONAL CORP., Rochester, NH 03867 (US)
(72) Inventor: SENELLART, Jean, 67000 Strasbourg (FR); DEBYSER, Pascal, F-16710 Saint Yrieix (FR)
(74) Representative: Bugnion Genève
(86) International application number: PCT/US2005/029366
(87) International publication number: WO 2006/026176

(56) References cited:
- US-A- 4 427 736
- US-A- 4 629 585
- US-A- 5 286 542
- US-A- 6 001 749
- US-A- 6 153 124
- US-A1- 2004 013 863
- PATENT ABSTRACTS OF JAPAN vol. 1996, no. 05, 31 May 1996 (1996-05-31) -& JP 08 012128 A (FUJI PHOTO FILM CO LTD), 16 January 1996 (1996-01-16)
- CADISCH PRECISION MESHES LTD: "technical filtration fabrics"[Online] 16 November 2001 (2001-11-16), pages 1-6, XP002359370 internet Retrieved from the Internet: URL:http://www.cadisch.com/dloads/Belts_Te chnicalFilter.pdf> [retrieved on 2005-12-15]

## Description

### Field of the Invention

The present invention is directed towards the production of nonwovens and concerns associated therewith, in particular, air flow and static electricity.

### Background of the Invention

There presently exists apparatus for the production of nonwovens for example, spun-bond webs, structures or articles formed from filaments or fibers typically made from a thermoplastic resin. Such an apparatus is disclosed in U.S.

Patent No. 5,814,349 issued September 29, 1998, the disclosure of which is incorporated herein by reference. These typically include a spinneret for producing a curtain of strands and a process-air blower for blowing process air onto the curtain of strands for cooling the same to form thermoplastic filaments. The thermoplastic filaments are then typically, aerodynamically entrained by the process air for aerodynamic stretching of the themoplastic filaments which are then, after passing through a diffuser, deposited upon a continuously circulating sieve belt for collecting the interentangled filaments and forming a web thereon. The web, structure or article, so formed, is then transferred and subject to further processing.

Apparatus of the type aforementioned, particularly for high-speed melt-bond web production are currently available from Reifenhäuser GmbH Co. Maschinenfabrik, Spicher Strabe D-53839 Troisdort, Germany and sold under the name Reicofil^{®}. The latest generation of such high-speed spun-bond lines is referred to as the Reicofil^{®} 3 type system.

Another manufacturer of such equipment is Nordson Corporation, 28601 Clemens Road, Westlake, Ohio 44145. Other manufacturers are STP Impianti, Rieter Perfojet, Kobelco, Ason and NWT.

An airlaid process may also be used to form a non-woven web. The airlaid process begins with a defibration system to open fluff pulp. A conventional fiberizer or other shredding device may also be used to form discrete fibers. Particles of absorbent materials (for example super absorbent powder), abrasives or other materials may then be mixed with the fibers. The mixture is then suspended in an air stream within a forming system and deposited to a moving forming wire, screen or rotating perforated cylinder. The randomly oriented airformed fiber may then be bonded by applying a latex binder and drying, thermally bonding thermoplastic staple fibers in the web, hydrogen or embossed bonding or a combination thereof.

In addition, the nonwoven web may be optionally compacted before the bonding step noted above. Compaction is typically performed on the forming wire before bonding. During compaction, the absorbents, abrasives or other materials, which are mixed with the fiber, damage the forming wire. A felt may be used on this position during the compaction step to prevent damage to the forming wire. The compressibility of the felt allows the nonwoven web to compact without damaging the felt or the wire.

There are a number of commercial processes available to produce airlaid nonwoven webs. For example, airlaid processes are available from Dan-Web Corp. having offices in Risskov, Denmark, and from M&J Forming Technologies having offices in Horsens, Denmark.

The present invention relates to producing nonwovens and the concerns associated therewith, in particular, static electricity.

In a nonwovens process, there is a large amount of static electricity generated. The present invention relates to addressing this problem. Normally a negative charge builds up on the filaments or fibers as they are being processed. Successive layers of fibers, since they are the same polarity, tend to repel each other. Charged fibers tend to cling to the press rolls. They also tend to be repelled from the forming fabric, since it will develop a charge thereon during the processing of the charged fibers. This charge tends to accumulate.

In European Patent Application No. EP 0 950 744 A1 it proposes using press rolls having a dielectric surface which is charged with a polarity that will repel the fibers. The forming fabric is also made from a dielectric material and charged such that it is opposite to that of the fibers, thereby attracting the fibers thereto.

The present invention concerns dissipating static electric charge whilst maintaining air permeability of a transfer belt. Heretofore, U.S. Patent 4,427,736 proposed dissipating the static charge that is built up by a dryer fabric, thereby preventing adhesion of the paper to the fabric when it is transferred from one fabric to another.

U.S. Patent 4,541,895 is a PM fabric made up of a plurality of impervious non-woven sheets joined together in a laminated arrangement. Each of the layers serves a particular purpose such as resistance to static charge. In addition, yarns could be incorporated between the laminates to add anti-static properties.

U.S. Patent 6,001,749 provides a patterned conductive textile by applying a finish to selective parts of a fabric which inhibits the formation of a conductive polymer coating in those areas.

U.S. Patent 6,153,124 is an electrically conductive knitted fabric made of 2-30 percent by weight of a conductor yarn. The conductor yarn is made of 5-30 percent by weight of galvanized iron fiber and 70-95 percent by weight of a polyester fiber. The conductivity is proportional to the concentration of the yarn.

None of the prior art however provides for an antistatic transfer belt for use in the production of nonwovens having a woven or spiral formed base to which a conductive batt, foam or other material is added whilst maintaining a desired air permeability.

JPH0812128 discloses a carrying unit 44 provided with plural endless carrier belts 66 to carry a reading document 16 in the arrow X direction, and these carrier belts 66 have a gas permeable woven fabric structure into which polyester fiber 72 is longitudinally and laterally woven, and conductive fiber 74 mixedly exists in the polyester fiber 72. Therefore, generation of static electricity between the carrier belts 66 and the reading document 16 can be checked.

XP 002359370 discloses technical filtration fabrics.

US 5 286 542 discloses a composite endless belt for use in printers, imaging devices and the like comprises a nonwoven, porous, open pore thermoplastic substrate having one or more electrically conductive elastomeric coatings thereon. The substrate, which comprises a combination of short fibers and fibrids or a randomly laid continuous fiber, is formed into an endless loop and the overlapping ends thereof are welded together ultrasonically. The belt is very thin, the combined thickness of the substrate and coating or coatings being less than about 0.015 inches.

US 4 629 585 discloses a foamable antistatic polymer composition is provided comprising a thermoplastic polymer, an elastomeric polymer, conductive carbon black having BET surface area of at least 500 m2/g and an amount of a blowing agent effective to expand said composition.

### Summary Of The Invention

It is therefore a principal object of the invention to provide a transfer belt for the production of non-woven webs, structures or articles, which dissipates static electric charge.

It is a further object of the invention that an adequate air permeability of the antistatic transfer belt is maintained.

These and other objects and advantages are achieved by an industrial antistatic transfer belt according to claim 1. Further features of the invention are defined by dependent claims 2-14.

### Brief Description of the Drawings

Thus by the present invention, its objects and advantages will be realized, the description of which should be taken in conjunction with the drawings wherein:
Figure 1 is a schematic representation of an apparatus wherein a non-woven web, structure or article is transferred; and which should be taken in conjunction with the drawings wherein:
Figure 2 is an enlarged sectional view of the transfer belt of the present invention taken along the machine direction of the belt.

### Detailed Description of the Preferred Embodiment

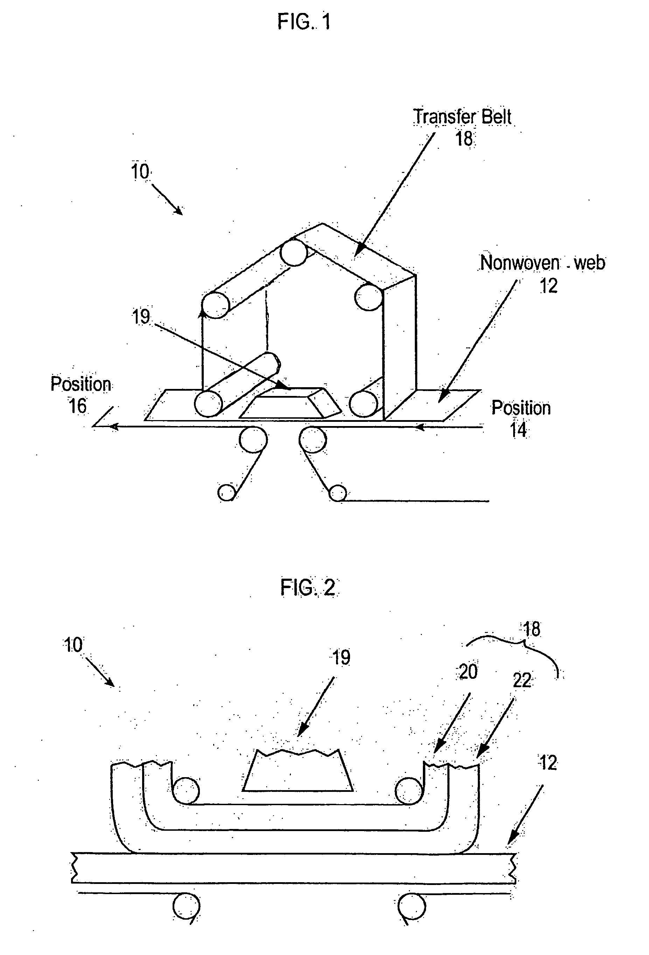

Turning now more particularly to the figures where like elements will be similarly numbered, Figure 1 shows schematically a part of an apparatus 10 for producing a non-woven web 12 by a process other than weaving, for example, by airlaid, drylaid, or spunlace processes. During the transfer of the web 12 before handling from a first position 14 to a second position 16, a large amount of static electric charge is built up on the web 12 and the transfer belt 18, which is undesirable. Related to this concern is the need for the transfer belt 18 to be permeable to air drawn through a vacuum system 19 that assists with the transfer of the web 12.

Advantageously, the present invention is a transfer belt for use in a nonwovens process which dissipates the static electric charge, whilst maintaining the desired air permeability. In this regard, shown in Figure 2 is a cross section of the antistatic transfer belt 18 used in the present invention. The transfer belt 18 comprises a base substrate or structure 20 made from a woven or spiral polymer material (which itself can be conductive) or of other construction suitable for the purpose covered with an electrically conductive batt, foam or other material 22 able to maintain air permeability in the range of approximately 20 to 200 CFM, or higher when the belt is coated, while having a low resistivity in the range of 10° ohm/square to 10⁸ ohm/square.

The base substrate may be any one of the structures used as bases for paper machine clothing, such as, for example, a woven or a spiral-link fabric. The base substrate may also be assembled from a strip of one of woven materials spirally wound in a plurality of turns, each turn being joined to those adjacent thereto by a continuous seam which is disclosed in commonly assigned U.S. Patent No. 5,360,656 to Rexfelt et al., the teachings of which are incorporated herein by reference. Further, the base substrate may be woven endless, or flat woven and subsequently rendered into endless form with a woven seam.

The base substrate may also be a laminated structure comprising two or more base substrates, each of which may be one of the structures described above. Where the base substrate is laminated, one of the component base substrates may be an on-machine-seamable fabric, so that the belt may be seamed into endless form during installation on a paper machine.,

The base substrate may be woven, or otherwise assembled, from yarns of any of the varieties used in the manufacture of paper machine clothing and industrial process fabrics. That is to say, the base substrate may include monofilament, plied monofilament, multifilament, plied multifilament or yarns spun from staple fibers of any of the synthetic polymeric resins used by those skilled in the art.

In the example shown in Figure 2, the substrate 20 imparts dimensional stability and compressibility to the belt 18; the conductive batt, foam or other material 22 dissipates the static electricity from the web 12 to the ground through the belt 18. Note that the substrate 20 may be joined to the batt, foam or other material 22 by needling, thermal bonding, stitching, chemical process, or other means suitable for the purpose.

In addition, the conductive material 22 may be coating on base substrate or structure 20. The coated conductive material 22 may be applied to the base substrate or structure 20 by spraying, extruding, or being a layer of thermofusible material.

As a further advantage, the web-facing surface of the batt, foam or other material 22 is smooth in order to avoid plugging and marking problems associated with certain nonwovens production utilizing a large amount of what is commonly referred to as Super Absorbent Powder or SAP. For example, the surface of a coated conductive material 22 may be made to obtain the desired surface topography or smoothness by compacting or sanding.

Accordingly, the antistatic transfer belt 18 of the present invention is a multi-layer structure which may contain one or more bases 20 and one or more layers of batt, foam or other material 22, a portion of which is conductive. Such a transfer belt 18 reduces static electric charge during nonwovens production whilst providing a desired air permeability in the web production process.

Although a preferred embodiment has been disclosed and described in detail herein, its scope should not be limited thereby; rather its scope should be determined by that of the appended claims.

## Claims

1. An antistatic transfer belt (18) comprising:
a base substrate (20) formed of yarns; and
an electrically conductive material (22) applied to said substrate,
said belt (18) capable of dissipating static electric charge whilst maintaining a desired air permeability in the range of 20 to 200 CFM
wherein said conductive material (22) is conductive batt or conductive foam; and
wherein said belt (18) is used in an apparatus (10) to produce a nonwoven web (12) formed by a production process taken from the group consisting of airlaid, drylaid, spunbond, meltbond, spunlace, or a combination of two or more such production processes.

2. The belt (18) claimed in claim 1, said conductive material (22) primarily dissipating said static electric charge.

3. The belt (18) claimed in one of previous claims, said substrate (20) providing dimensional stability and compressibility to said belt (18).

4. The belt (18) claimed in one of previous claims, said substrate (20) is also electrically conductive.

5. The belt (18) claimed in one of previous claims, said substrate (20) is made from a woven or spiral material.

6. The belt (18) claimed in one of previous claims, said substrate (20) is made from polymer material.

7. The belt (18) claimed in one of previous claims, the belt having a resistivity between 10⁰ ohm/square and 10⁸ ohm/square.

8. The belt (18) claimed in one of previous claims, the conductive material (22) and the substrate (20) are joined by needling, thermal bonding, stitching, or chemical process.

9. The belt (18) claimed in claim 1, said belt has a smooth web facing surface whereby plugging and marking of said nonwovens web is avoided.

10. The belt (18) claimed in claim 1 or 9,
wherein static electric charge built up on said web and said belt is drained away through the belt to ground components.

11. The belt (18) claimed in one of claims 1 9 or 10, the belt (18) is endless or fitted with a seam.

12. The belt claimed in one of claims 1 or 9 or 10 or 11, wherein said conductive material (22) is coated on said base substrate (18).

13. The belt claimed in claim 12, wherein said coating is applied by spraying or extruding.

14. The belt claimed in claim 12, wherein said coating is a layer of thermofusible material.

## Patentansprüche

1. Antistatisches Überführungsband (18), umfassend:
ein Basissubstrat (20), das aus Garnen gebildet ist, und
ein elektrisch leitfähiges Material (22), das auf das Substrat aufgebracht ist,
wobei das Band (18) in der Lage ist, statische elektrische Ladung abzuleiten, während eine gewünschte Luftdurchlässigkeit im Bereich von 20 bis 200 CFM gehalten wird,
wobei das leitfähige Material (22) leitfähige Fasermatte oder leitfähiger Schaum ist und
wobei das Band (18) in einer Vorrichtung (10) zur Herstellung einer Vliesbahn (12) verwendet wird, die mit einem Herstellungsverfahren gebildet wird, das aus der Gruppe ausgewählt ist, die aus Luftlege-, Trockenlege-, Spinnvlies-, Meltblown-, Spunlace- oder einer Kombination aus zwei oder mehr derartiger Herstellungsverfahren ausgewählt ist.

2. Band (18) nach Anspruch 1, wobei das leitfähige Material (22) hauptsächlich die statische elektrische Ladung ableitet.

3. Band (18) nach einem der vorhergehenden Ansprüche, wobei das Substrat (20) dem Band (18) Dimensionsstabilität und Komprimierbarkeit verleiht.

4. Band (18) nach einem der vorhergehenden Ansprüche, wobei das Substrat (20) ebenfalls elektrisch leitfähig ist.

5. Band (18) nach einem der vorhergehenden Ansprüche, wobei das Substrat (20) aus einem Gewebe oder einem spiraligen Material besteht.

6. Band (18) nach einem der vorhergehenden Ansprüche, wobei das Substrat (20) aus Polymermaterial besteht.

7. Band (18) nach einem der vorhergehenden Ansprüche, wobei das Band einen Widerstand zwischen 10⁰ Ohm/Quadrat und 10⁸ Ohm/Quadrat aufweist.

8. Band (18) nach einem der vorhergehenden Ansprüche, wobei das leitfähige Material (22) und das Substrat (20) durch Vernadeln, thermisches Binden, Nähen oder chemische Verfahren verbunden sind.

9. Band (18) nach Anspruch 1, wobei das Band eine glatte der Bahn zugewandte Oberfläche aufweist, wodurch das Verstopfen und Hinterlassen von Spuren auf der Vliesbahn vermieden wird.

10. Band (18) nach Anspruch 1 oder 9, wobei statische elektrische Ladung, die sich auf der Bahn und dem Band gebildet hat, durch das Band in Erdungskomponenten abgeleitet wird.

11. Band (18) nach einem der Ansprüche 1 bis 9 oder 10, wobei das Band (18) endlos oder mit einer Naht versehen ist.

12. Band (18) nach einem der Ansprüche 1 bis 9 oder 10 oder 11, wobei das leitfähige Material (22) als Beschichtung auf das Basissubstrat (18) aufgebracht ist.

13. Band (18) nach Anspruch 12, wobei die Beschichtung durch Aufsprühen oder Extrudieren aufgebracht ist.

14. Band nach Anspruch 12, wobei die Beschichtung eine Schicht aus wärmeschmelzendem Material ist.

## Revendications

1. Courroie de transfert antistatique (18) qui comprend :
un substrat de base (20) formé de fils ; et
un matériau électriquement conducteur (22) appliqué sur ledit substrat,
ladite courroie (18) étant capable de dissiper la charge électrique statique tout en maintenant une perméabilité à l'air souhaitée de l'ordre de 20 à 200 CFM,
dans laquelle ledit matériau conducteur (22) est un tissu conducteur ou une mousse conductrice ; et
dans laquelle ladite courroie (18) est utilisée dans un appareil (10) afin de produire une bande non tissée (12) formée par un processus de production issu du groupe qui consiste en le airlaid, la pose à sec, le non-tissé par filage direct, la fusion, l'hydroliage, ou une combinaison de deux de ces processus de production ou plus.

2. Courroie (18) selon la revendication 1, ledit matériau conducteur (22) dissipant principalement ladite charge électrique statique.

3. Courroie (18) selon l'une des revendications précédentes, ledit substrat (20) offrant une stabilité dimensionnelle et une compressibilité à ladite courroie (18).

4. Courroie (18) selon l'une des revendications précédentes, ledit substrat (20) étant également électriquement conducteur.

5. Courroie (18) selon l'une des revendications précédentes, ledit substrat (20) étant composé d'un matériau tissé ou en spirale.

6. Courroie (18) selon l'une des revendications précédentes, ledit substrat (20) étant composé d'un polymère.

7. Courroie (18) selon l'une des revendications précédentes, la courroie ayant une résistivité de l'ordre de 10° ohm/carré à 10⁸ ohm/carré.

8. Courroie (18) selon l'une des revendications précédentes, le matériau conducteur (22) et le substrat (20) étant joints par aiguilletage, liaison thermique, couture, ou par un processus chimique.

9. Courroie (18) selon la revendication 1, ladite courroie ayant une bande lisse tournée vers la surface, moyennant quoi tout comblement et tout marquage de ladite bande non tissée est évité.

10. Courroie (18) selon la revendication 1 ou 9, dans laquelle la charge électrique statique accumulée sur ladite bande et ladite courroie est évacuée par la courroie vers le sol.

11. Courroie (18) selon l'une des revendications 1, 9 ou 10, la courroie (18) étant sans fin, ou munie d'une couture.

12. Courroie selon l'une des revendications 1, 9, 10 ou 11, dans laquelle ledit matériau conducteur (22) est appliqué sur ledit substrat de base (18).

13. Courroie selon la revendication 12, dans laquelle ledit revêtement est appliqué par pulvérisation ou extrusion.

14. Courroie selon la revendication 12, dans laquelle ledit revêtement est une couche de matériau thermofusible.
